# EUROPEAN PATENT SPECIFICATION

(11) **EP 3 018 861 B1**
(45) Date of publication and mention of the grant of the patent: **30.01.2019**
(21) Application number: 14820303.7
(22) Date of filing: 16.06.2014
(51) Int. Cl.: H04L 12/24, H04L 29/06

(54) **CONFIGURATION INFORMATION SENDING METHOD, SYSTEM AND APPARATUS**
KONFIGURATIONSINFORMATIONENSENDEVERFAHREN, -SYSTEM UND -VORRICHTUNG
PROCÉDÉ, SYSTÈME ET APPAREIL D'ENVOI D'INFORMATIONS DE CONFIGURATION

(30) Priority: 03.07.2013 CN 201310277643
(43) Date of publication of application: 11.05.2016
(73) Proprietor: ZTE Corporation, Shenzhen, Guangdong 518057 (CN)
(72) Inventor: MENG, Wei, Shenzhen Guangdong 518057 (CN); ZONG, Zaifeng, Shenzhen Guangdong 518057 (CN)
(74) Representative: Brunazzi, Stefano
(86) International application number: PCT/CN2014/079982
(87) International publication number: WO 2015/000358

(56) References cited:
- CN-A- 101 651 597
- CN-A- 102 073 501
- CN-A- 102 655 452
- CN-A- 102 868 523
- US-A1- 2005 283 604
- US-B1- 7 558 877

## Description

### Technical Field

The disclosure relates to the Internet field, and in particular to a method, system and device for sending configuration information.

### Background

An Internet Protocol Security (IPSec) is a frame structure with an open standard, and as to the IPSec, development of secure communication on an Internet Protocol (IP) network may be ensured by encrypted security service.

The IPSec is not an independent protocol, and it provides a complete set of system structure applied to network data security on an IP layer, including: an Authentication Header (AH) protocol, an Encapsulating Security Payload (ESP) protocol, an Internet Key Exchange (IKE) protocol, some algorithms for network authentication and encryption, and the like, wherein the AH protocol and the ESP protocol may be used for providing security service, while the IKE protocol may be used for key exchange. Therefore, the IPSec provides two security mechanisms as follows: an authentication mechanism and an encryption mechanism.

First, the authentication mechanism enables a data receiver of IP communication to confirm real identity of a data sender and whether data is tampered in a transmission process or not; and

Second, the encryption mechanism performs encryption operation on data to ensure confidentiality of the data to prevent the data from being eavesdropped in a transmission process. The AH protocol in IPSec protocols defines an authentication application method, and provides data source authentication and ensures integrity; and the ESP protocol defines an encryption and optional authentication application method and ensures data reliability.

Security service provided for a data stream by IPSec may be implemented by a Security Association (SA), and may include: contents such as a protocol, an algorithm and a key, and specifically determines how to process an IP message. An SA is a one-way logic connection between two IPSec systems, and an input data stream and an output data stream are processed by an input SA and an output SA respectively. An SA is uniquely identified by a triple (a Security Parameter Index (SPI), a destination IP address and a security protocol number).

Network virtualization is developed on a basis of a cloud computing technology, and is based on a virtualization technology. In term of design of a router, the router consists of software control and a hardware data channel. The software control may include: management (for example: a Command Line Interface (CLI) and a Simple Network Management Protocol (SNMP)) and a routing protocol (for example: an Open Shortest Path First (OSPF) and a Border Gateway Protocol (BGP)). The hardware data channel may include: querying, exchanging and caching of each packet. If all forwarding devices in a network are considered as managed resources, a concept of a network Operating System (OS) may be abstracted with reference to a principle of an OS. The network OS abstracts a specific detail of bottom-layer forwarding device on one hand, and provides a unified management view and programming interface for an upper-layer application on the other hand. Therefore, a user may develop various application programs and define a logic network topology through software on a basis of the network OS to meet different requirements on network resources without concerning a physical topology structure of a bottom-layer network.

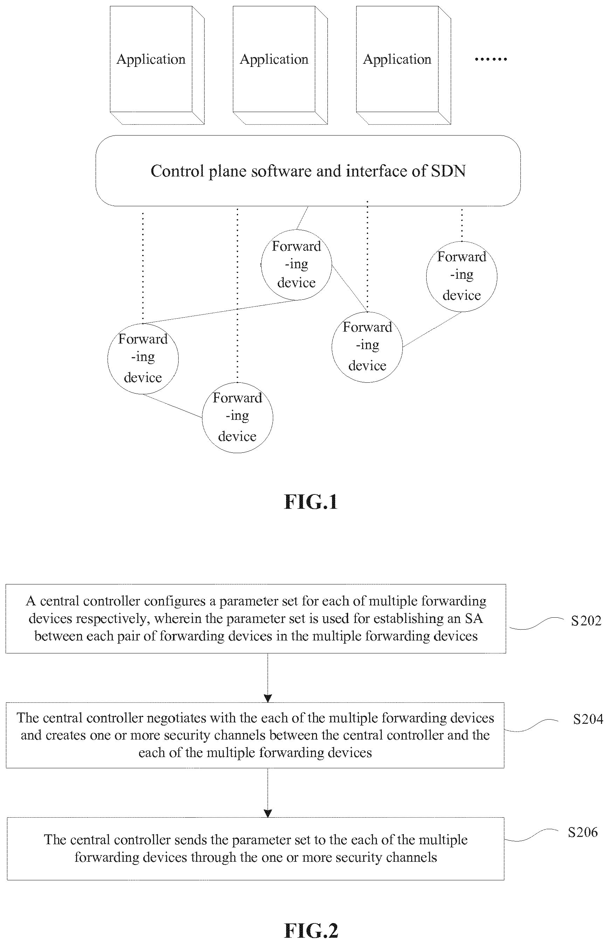

At present, the network virtualization include: an Openflow technology and Software Defined Network (SDN) architecture proposed by a Stanford University, an Interface to a Routing System (I2RS) architecture proposed by an Internet Engineering Task Force (IETF), and the like. Each of the abovementioned technologies has three forms as follows: a application controller, a forwarding device and a programmable interface. Fig. 1 is a schematic diagram showing a network virtualization framework according to the related art. As shown in Fig. 1, the three forms are respectively one or more central controllers, one or more virtual switches and one or more programmable interface in the SDN architecture and the Openflow; while the three forms are respectively one or more I2RS clients, one or more forwarding devices and one or more I2RS agents in the I2RS architecture.

In an existing IPSec technology, an SA may be established in one of the following manners: a manual configuration manner, a automatic negotiation manner. The manual configuration manner for the SA refers to manually setting preset parameters at two ends and establishing the SA after a parameter matching and negotiation of the two ends; and the automatic negotiation manner is generated and maintained by an IKE, and refers to performing matching and negotiation by two communication parties on a basis of own security policy database to finally establish the SA without user intervention.

When IPSec SAs are required to be established among multiple routers, whether the manual configuration manner or the automatic negotiation manner has two defects as follows:
Defect 1: when there are a huge number of routers, it is necessary to perform related SA configuration for each router, and operation is tedious and complex; and
Defect 2: if there are n routers, establishment of a negotiation channel between every two routers is required, and then (n-1)+(n-2)+(n-3)+...+(n-(n-1)) negotiation signalling channels, i.e. n*(n-1)/2 channels, are occupied.

Moreover, no feasible methods are provided for a programmable interface between a controller and a forwarding device for establishment of an IPSec SA in an existing network virtualization technology, and consideration about security of the programmable interface in the existing network virtualization is inadequate, so that the existing network virtualization technology is inapplicable to establishment of the IPSec SA.

The US Patent Application US 2005/283604 A1 describes a security association configuration in Virtual Private Networks.

The U.S. Patent US 7,558,877 B1 describes a self-configuring methods and apparatus for providing secure communication between members of a group.

### Summary

The present invention relates to a method, a system and a central controller as defined in independent claims 1, 10 and 14, respectively.

Particular embodiments are defined in the dependent claims.

According to one aspect of the disclosure, a method for sending configuration information is provided.

A method for sending configuration information transmission according to the disclosure includes: a central controller configures a parameter set for each of multiple forwarding devices respectively, wherein the parameter set is used for establishing an SA between each pair of the forwarding devices in the multiple forwarding devices; the central controller negotiates with the each of the multiple forwarding devices and creates one or more security channels between the central controller and the each of the multiple forwarding devices; and the central controller sends the parameter set to the each of the multiple forwarding devices through the one or more security channels.

In an example embodiment, the central controller negotiates with the each of the multiple forwarding devices and creates one or more IPSec security channels between the central controller and the each of the multiple forwarding devices.

In an example embodiment, the central controller negotiates with the each of the multiple forwarding devices and creates the one or more security channels between the central controller and the each of the multiple forwarding devices includes: the central controller performs an IKE negotiation with the each of the multiple forwarding devices through a preset programmable interface; and when a consistent negotiation result is obtained, the central controller creates the one or more IPSec security channels between the central controller and the each of the multiple forwarding devices.

In an example embodiment, the central controller sends the parameter set to the each of the multiple forwarding devices through the one or more IPSec security channels includes: the central controller establishes secure connection with the each of the multiple forwarding devices through the one or more IPSec security channels; and the central controller sends the parameter set to the each of the multiple forwarding devices through a preset network protocol or in a preset management manner.

In an example embodiment, the preset network protocol or the preset management manner includes one of the followings: a telecommunication network protocol (TELNET); a Secure Shell Protocol (SSH); an SNMP; a network configuration protocol (NETCONF); a Customer Premise Device(CPE) wireless area network management protocol (TR069); a web open source system (WEBGUI)-based management manner; a File Transfer Protocol (FTP); a Trivial File Transfer Protocol (TFTP); a Secure File Transfer Protocol (SFTP); a system log; a Yet Another Next Generation (YANG) language mode; and a BGP.

In an example embodiment, after the central controller sends the parameter set to the each of the multiple forwarding devices through the one or more security channels, the method further includes: a first forwarding device in the multiple forwarding devices receives a data message to be forwarded to one or more second forwarding devices in the multiple forwarding devices; the first forwarding device acquires encapsulation mode information and key information from the parameter set, and performs, according to the encapsulation mode information and the key information, encryption and encapsulation processing on the data message to be forwarded; and the first forwarding device sends the encapsulated data message to the one or more second forwarding devices.

In an example embodiment, after the central controller sends the parameter set to the each of the multiple forwarding devices through the one or more security channels, the method further includes: the one or more second forwarding devices acquire decryption information from the parameter set, and decrypt the data message to be forwarded according to the decryption information; and the one or more second forwarding devices forward the decrypted data message.

In an example embodiment, after the central controller sends the parameter set to the each of the multiple forwarding devices through the one or more security channels, the method further includes: the central controller determines that a life cycle of the SA ends; and the central controller recalculates key information and recreates a parameter set to re-establish an SA.

In an example embodiment, the parameter sets include at least one of: a Virtual Private Network (VPN) type between the each pair of forwarding devices in the multiple forwarding devices; an SPI configured for the each of the multiple forwarding devices by the central controller; an IPSec tunnel source IP address configured for the each of the multiple forwarding devices by the central controller; an IPSec tunnel destination IP address configured for the each of the multiple forwarding devices by the central controller; a security protocol configured for the each of the multiple forwarding devices by the central controller; an encapsulation mode configured for the each of the multiple forwarding devices by the central controller; an encryption algorithm configured for the each of the multiple forwarding devices by the central controller; an encryption key calculated for the each of the multiple forwarding devices by the central controller; an integrity algorithm configured for the each of the multiple forwarding devices by the central controller; an integrity key calculated for the each of the multiple forwarding devices by the central controller; an anti-replay window size configured for the each of the multiple forwarding devices by the central controller; an SA life cycle type configured for the each of the multiple forwarding devices by the central controller; an ESP algorithm mode configured for the each of the multiple forwarding devices by the central controller; and an encryption mode configured for the each of the multiple forwarding devices by the central controller.

According to another aspect of the disclosure, a system for sending configuration information is provided.

A system for sending configuration information transmission according to the disclosure includes: a central controller, wherein the central controller includes: a configuration component, configured to configure a parameter set for each of multiple forwarding devices respectively, wherein the parameter set is used for establishing an SA between each pair of the forwarding devices in the multiple forwarding devices; a creation component, configured to negotiate with the each of the multiple forwarding devices and create one or more security channels between the central controller and the each of the multiple forwarding devices; and a sending component, configured to send the parameter sets to the each of the multiple forwarding devices through the one or more security channels.

In an example embodiment, the creation component is configured to respectively negotiate with the each of the multiple forwarding devices and create one or more IPSec security channels between the central controller and the each of the multiple forwarding devices.

In an example embodiment, the creation component includes: a negotiation element, configured to perform an IKE negotiation with the each of the multiple forwarding devices through a preset programmable interface; and a creation element, configured to, when a output of the negotiation element is YES, create the one or more IPSec security channels between the central controller and the each of the multiple forwarding devices.

In an example embodiment, the sending component includes: a connection element, configured to establish secure connection with the each of the multiple forwarding devices through the one or more IPSec security channels; and a sending element, configured to send the parameter set to the each of the multiple forwarding devices through a preset network protocol or in a preset management manner.

In an example embodiment, the preset network protocol or the preset management manner includes one of: a TELNET; an SSH; an SNMP; a NETCONF; a CPE TR069; a WEBGUI-based management manner; an FTP; a TFTP; an SFTP; a system log; a YANG language mode; and a BGP.

In an example embodiment, the system further includes: a first forwarding device in the multiple forwarding devices, wherein the first forwarding device includes: a receiving component, configured to receive a data message to be forwarded to one or more second forwarding devices in the multiple forwarding devices; an encapsulation component, configured to acquire encapsulation mode information and key information from the parameter set, and perform, according to the encapsulation mode information and the key information, encryption and encapsulation processing on the data message to be forwarded; and a sending component, configured to send the encapsulated data message to the one or more second forwarding devices.

In an example embodiment, the system further includes: the one or more second forwarding devices, wherein each of the one or more second forwarding devices includes: a decryption component, configured to acquire decryption information from the parameter set, and decrypt the data message to be forwarded according to the decryption information; and a forwarding component, configured to forward the decrypted data message.

In an example embodiment, the central controller further includes: a determination component, configured to determine that a life cycle of the SA ends; and a creation component, configured to recalculate key information and recreate a parameter set to re-establish an SA.

In an example embodiment, the parameter sets include at least one of: a VPN type between the each pair of the forwarding devices in the multiple forwarding devices; an SPI configured for the each of the multiple forwarding devices by the central controller; an IPSec tunnel source IP address configured for the each of the multiple forwarding devices by the central controller; an IPSec tunnel destination IP address configured for the each of the multiple forwarding devices by the central controller; a security protocol configured for the each of the multiple forwarding devices by the central controller; an encapsulation mode configured for the each of the multiple forwarding devices by the central controller; an encryption algorithm configured for the each of the multiple forwarding devices by the central controller; an encryption key calculated for the each of the multiple forwarding devices by the central controller; an integrity algorithm configured for the each of the multiple forwarding devices by the central controller; an integrity key calculated for the each of the multiple forwarding devices by the central controller; an anti-replay window size configured for the each of the multiple forwarding devices by the central controller; an SA life cycle type configured for the each of the multiple forwarding devices by the central controller; an ESP algorithm mode configured for the each of the multiple forwarding devices by the central controller; and an encryption mode configured for the each of the multiple forwarding devices by the central controller.

According to the other aspect of the disclosure, a device for sending configuration information is provided.

A device for sending configuration information according to the disclosure includes: a configuration component, configured to configure a parameter set for each of multiple forwarding devices respectively, wherein the parameter set is used for establishing an SA between each pair of the forwarding devices in the multiple forwarding devices; a creation component, configured to negotiate with the each of the multiple forwarding devices and create one or more security channels between the central controller and een the each of the multiple forwarding devices; and a sending component, configured to send the parameter set to the each of the multiple forwarding devices through the one or more security channels.

According to the disclosure, the central controller is adopted to configure the parameter set for the each of the multiple forwarding devices, wherein the parameter set is used for establishing the SA between each pair of the forwarding devices in the multiple forwarding devices; the central controller negotiates with the each of the multiple forwarding devices and create one or more security channels between the central controller and the each of the multiple forwarding devices; and the central controller sends the parameter set to the each of the multiple forwarding devices through the one or more security channels. With adoption of the central controller, original establishment of the SAs among the multiple forwarding devices is replaced by configuring the parameter set for the each of the multiple forwarding devices by the central controller and negotiating with the each of the multiple forwarding devices and create one or more security channels between the central controller and the each of the multiple forwarding devices, so that the problem in the related art of tediousness, complexity and lower security of the manner of establishing the SAs among the multiple forwarding devices is solved, complexity in the establishment of the SAs among the multiple forwarding devices is further lowered, and data transmission security is further improved.

### Brief Description of the Drawings

Drawings, provided for further understanding of the disclosure and forming a part of the specification, are used to explain the disclosure together with embodiments of the disclosure rather than to limit the disclosure, wherein:
Fig. 1 is a schematic diagram of a network virtualization framework according to the related art;
Fig. 2 is a flowchart of a method for sending configuration information according to an embodiment of the disclosure;
Fig. 3 is a schematic diagram of a network topology structure for creating IPSec SAs according to an example embodiment of the disclosure;
Fig. 4 is a structural block diagram of a system for sending configuration information according to an embodiment of the disclosure;
Fig. 5 is a structural block diagram of a system for sending configuration information according to an example embodiment of the disclosure; and
Fig. 6 is a structural block diagram of a device for sending configuration information according to an embodiment of the disclosure.

### Detailed Description of the Embodiments

The disclosure is described below with reference to the accompanying drawings and embodiments in detail. Note that, the embodiments of the disclosure and the features of the embodiments may be combined with each other if there is no conflict.

Fig. 2 is a flowchart of a method for sending configuration information according to an embodiment of the disclosure. As shown in Fig. 2, the method may include the following processing steps:
Step S202: a central controller configures a parameter set for each of multiple forwarding devices respectively, wherein the parameter set is used for establishing an SA between each pair of the forwarding devices in the multiple forwarding devices;
Step 204: the central controller negotiates with the each of the multiple forwarding devices and creates one or more security channels between the central controller and the each of the multiple forwarding devices; and
Step 206: the central controller sends the parameter set to the each of the multiple forwarding devices through the one or more security channels.

A manner of establishing SAs among multiple forwarding devices in the related art is tedious, complex and lower in security. By the method shown in Fig. 2, the central controller configures the parameter set for each of the multiple forwarding devices, wherein the parameter set is used for establishing the SA between each pair of the forwarding devices in the multiple forwarding devices; the central controller negotiates with the each of the multiple forwarding devices and creates one or more security channels between the central controller and the each of the multiple forwarding devices; and the central controller sends the parameter set to each of the multiple forwarding devices through the one or more security channels. With adoption of the central controller, original establishment of the SAs among the multiple forwarding devices is replaced by configuring the parameter set for each of the multiple forwarding devices by the central controller and negotiating and creating the security channels with each of the multiple forwarding devices to establish the SAs among the multiple forwarding devices, so that the problem in the related art of tediousness, complexity and lower security of the manner of establishing the SAs among the multiple forwarding devices in the related are is solved, complexity in the establishment of the SAs among the multiple forwarding devices is further lowered, and data transmission security is further improved.

In an example implementation process, the central controller negotiates with the each of the multiple forwarding devices and creates one or more IPSec security channels between the central controller and the each of the multiple forwarding devices.

In an example embodiment, in Step S204, that the central controller negotiates with the each of the multiple forwarding devices and creates one or more security channels between the central controller and the each of the multiple forwarding devices may include the following operation:
Step S1: the central controller performs an IKE negotiation with each of the multiple forwarding devices through a preset programmable interface; and
Step S2: when a consistent negotiation result is obtained, the central controller creates the one or more IPSec security channels between the central controller and the each of the multiple forwarding devices.

In the example embodiment, two forwarding devices (i.e. forwarding device 1 and forwarding device 2) are taken as an example, and the forwarding device 1 establishes an IPSec security channel with the central controller by static configuration, and performs IPSec option negotiation, authenticates each end of communication and manages a session key of an IPSec tunnel through an IKE protocol. The forwarding device 2 establishes an IPSec security channel with the central controller by static configuration, and performs IPSec option negotiation, authenticates each end of communication and manages a session key of an IPSec tunnel through the IKE protocol. After the above-mentioned processing is finished, links established between each forwarding device and the central controller through programmable interfaces are safe and reliable.

In an example embodiment, in Step S206, the central controller sends the parameter set to the each of the multiple forwarding devices through the one or more IPSec security channels may include the following steps:
Step S3: the central controller performs secure connection with the each of the multiple forwarding devices through the one or more IPSec security channels; and
Step S4: the central controller sends the parameter set to the each of the multiple forwarding devices through a preset network protocol or in a preset management manner.

In the example embodiment, the central controller sends parameters required by each of the two forwarding devices to the forwarding device 1 and the forwarding device 2 through the preset network protocol or in the preset management manner. Messages which are transmitted by the central controller through the preset network protocol and formed by the parameters are subjected to IPSec encryption processing of the central controller to be converted into a ciphertext format for transmission in a network until the messages reach the two forwarding devices. The forwarding device 1 and the forwarding device 2 perform decryption processing on the configuration messages after receiving the configuration messages, and then write the configuration messages into SA table entries of own IPSec components. The forwarding device 1 and the forwarding device 2 implement establishment of SAs. An IKE signalling channel between the two forwarding devices is replaced with one IKE signalling channel between each of the two forwarding devices and the central controller, and if a number of the multiple forwarding devices is N, a number of signalling channels is also N, so that the problem that the number of IKE signalling channels is a square of N in the related art is solved. At this moment, security encryption processing may be adopted for data transmission between the forwarding device 1 and the forwarding device 2.

In an example implementation process, the preset network protocol or the preset management manner may include, but not limited to, one of the followings: a TELNET; an SSH; an SNMP; a NETCONF; a CPE TR069; a WEBGUI-based management manner; an FTP; a TFTP; a SFTP; a system log; a YANG language mode; and a BGP.

In an example embodiment, after the central controller sends the parameter set to each of the multiple forwarding devices through the one or more security channels in Step S206, the method may further include the following operation:
Step S5: a first forwarding device in the multiple forwarding devices receives a data message to be forwarded to one or more second forwarding devices in the multiple forwarding devices;
Step S6: the first forwarding device acquires encapsulation mode information and key information from the parameter set, and performs encryption encapsulation processing on the data message to be forwarded according to the encapsulation mode information and the key information; and
Step S7: the first forwarding device sends the encapsulated data message to the one or more second forwarding devices.

In the example embodiment, when a data packet to be forwarded is required to be sent from the forwarding device 1 to the forwarding device 2, the forwarding device 1 may search for a corresponding SA table entry and perform encryption encapsulation processing on a message through an ESP tunnel mode and key information (including: an encryption key and an integrity key) according to a content of the table entry at first, and then send the message to the forwarding device 2.

In an example embodiment, after the central controller sends the parameter set to the each of the multiple forwarding devices through the one or more security channels in Step S206, the method may further include the following steps:
Step S8: the one or more second forwarding devices acquire decryption information from the parameter set, and decrypt the data message to be forwarded by adopting the decryption information; and
Step S9: the one or more second forwarding devices forward the decrypted data message.

In the example embodiment, when a data packet to be forwarded reaches the forwarding device 2, the forwarding device 2 may search for a corresponding SA table entry and perform decryption processing on a message according to a content of the table entry, and then forward the decrypted message.

In an example embodiment, after the central controller sends the parameter set to the each of the multiple forwarding devices through the one or more security channels in Step S206, the method may further include the following steps:
Step S10: the central controller determines that a life cycle of the SA end; and
Step S11: the central controller recalculates key information and recreates a parameter set to re-establish an SA.

In the example embodiment, when the SAs expire, the central controller needs to recalculate key information (including an encryption key and an integrity key) and recreate an SA between each pair of the forwarding devices in the multiple forwarding devices.

In the example implementation process, the parameter set may include, but not limited to, at least one of the followings:
a VPN type between the each pair of the forwarding devices in the multiple forwarding devices;
an SPI configured for the each of the multiple forwarding devices by the central controller;
an IPSec tunnel source IP address configured for the each of the multiple forwarding devices by the central controller;
an IPSec tunnel destination IP address configured for the each of the multiple forwarding devices by the central controller;
a security protocol configured for the each of the multiple forwarding devices by the central controller;
an encapsulation mode configured for the each of the multiple forwarding devices by the central controller;
an encryption algorithm configured for the each of the multiple forwarding devices by the central controller;
an encryption key calculated for the each of the multiple forwarding devices by the central controller;
an integrity algorithm configured for the each of the multiple forwarding devices by the central controller;
an integrity key calculated for the each of the multiple forwarding devices by the central controller;
an anti-replay window size configured for the each of the multiple forwarding devices by the central controller;
an SA life cycle type configured for the each of the multiple forwarding devices by the central controller;
an ESP algorithm mode configured for the each of the multiple forwarding devices by the central controller;
and an encryption mode configured for the each of the multiple forwarding devices by the central controller.

It needs to be noted that the encryption key and the integrity key of each parameter in the parameter set may be calculated by the central controller, and the other parameters may be configured for the each of the multiple forwarding devices by the central controller.

In the example embodiment, the central controller may configure the following parameters to the each of the multiple forwarding devices:
the VPN type between the each pair of the forwarding devices in the multiple forwarding devices, for example: IPSec and Layer-2 Virtual Private Network (L2VPN);
related configurations made to the multiple forwarding devices by the central controller are as follows:
   (1) an SPI;
   (2) an IPSec tunnel source IP address;
   (3) an IPSec tunnel destination IP address;
   (4) a security protocol, for example: an AH or an ESP;
   (5) an encapsulation mode, for example: a transmission mode or a tunnel mode;
   (6) an encryption algorithm;
   (7) an encryption key;
   (8) an integrity algorithm;
   (9) an integrity key;
   (10) an anti-replay window size;
   (11) an SA life cycle type, for example: time, a byte and a combination of byte and time;
   (12) an ESP algorithm mode, for example: an encryption algorithm or a compression algorithm; and
   (13) an encryption mode, for example: a Electronic Code Book (ECB) mode, a Cipher Block Chaining (CBC) mode, a Cipher FeedBack (CFB) mode, a Output FeedBack (OFB) mode, a Counter (CTR) mode and a variant F8 mode of a OFB mode.

In addition, in the technical solution provided by the disclosure, other optional parameters may further be set, and may be specifically set according to a practical condition, which will not be described in detail here.

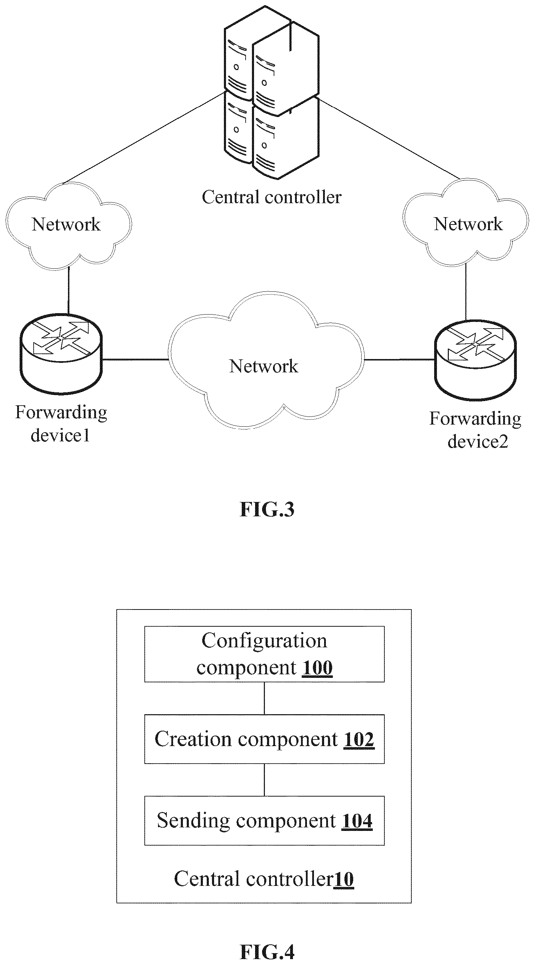

The example implementation process is further described below with reference to an example implementation mode shown in Fig. 3 in detail.

Fig. 3 is a schematic diagram of a network topology structure for creating with IPSec SAs according to an example embodiment of the disclosure. As shown in Fig. 3, a forwarding device 1 and a forwarding device 2 are required to establish an SA and establish a security transmission channel in an IPSec manner. The forwarding device 1 and the forwarding device 2 are respectively connected with the central controller through a programmable interface, and create an IPSec SA through parameters sent by the central controller.
Step 1: the central controller performs parameter configuration, which may specifically include:
   (1) comprehensive configuration:
      configuring a VPN type between the forwarding device 1 and the forwarding device 2 to be an IPSec; and
      configuring an SNMP client.
   (2) configuration for the forwarding device 1 and he forwarding device 2:
      configuring an SPI value of the forwarding device 1 to be 1024 and configuring an SPI value of the forwarding device 2 to be 2048;
      configuring an IPSec tunnel source IP address of the forwarding device 1 to be 202.1.1.1 and configuring an IPSec tunnel destination IP address of the forwarding device 1 to be 202.1.2.1;
      configuring an IPSec tunnel source IP address of the forwarding device 2 to be 202.1.2.1 and configuring an IPSec tunnel destination IP address of the forwarding device 1 to be 202.1.1.1;
      configuring a security protocol between the forwarding device 1 and the forwarding device 2 to be an ESP;
      configuring an IPSec encapsulation mode between the forwarding device 1 and the forwarding device 2 to be a tunnel model;
      configuring an encryption algorithm between the forwarding device 1 and the forwarding device 2 to be a Data Encryption Standard (DEs);
      configuring an encryption key between the forwarding device 1 and the forwarding device 2 to be X (56-bit binary number);
      configuring anti-replay window sizes of both the forwarding device 1 and the forwarding device 2 to be 64;
      configuring an SA life cycle type of the forwarding device 1 and the forwarding device 2 to be 2,400 seconds;
      configuring an ESP algorithm mode of the forwarding device 1 and the forwarding device 2 to be an encryption algorithm; and
      configuring an encryption mode of the forwarding device 1 and the forwarding device 2 to be an ECB.
   (3) parameter configuration on the forwarding device 1:
      configuring an interface between the forwarding device 1 and the central controller to be an FEI_1/1, and performing an IPSec VPN and IKE configuration; and
      opening an SNMP function of FEI_1/1.
   (4) parameter configuration on the forwarding device 2:
      configuring an interface between forwarding device 2 and the central controller to be an FEI_1/2, and performing an IPSec VPN and IKE configuration; and
      opening an SNMP function of FEI_1/2.
Step 2: the central controller negotiates a key with interface the FEI_1/1 of the forwarding device 1 through the IKE, and creates an IPSec security channel.
Step 3: the central controller negotiates a key with interface the FEI_1/2 of the forwarding device 2 through the IKE, and creates an IPSec security channel.
Step 4: the central controller is securely connected to the forwarding device 1 through the IPSec security channel created in Step 2 by virtue of an Management Information Base (MIB) software.
Step 5: the central controller securely writes configuration information about the forwarding device 1 on the central controller into an IPSec SA table of the forwarding device 1 through the IPSec security channel created in Step 2 by virtue of the MIB software.
Step 6: the central controller is securely connected to the forwarding device 2 through the IPSec security channel created in Step 3 by virtue of the MIB software.
Step 7: the central controller securely writes configuration information about the forwarding device 2 on the central controller into an IPSec SA table of the forwarding device 2 through the IPSec security channel created in Step 3 by virtue of the MIB software.
Step 8: when a data packet to be forwarded is required to be sent from the forwarding device 1 to the forwarding device 2, the forwarding device 1 may search for a corresponding SA table entry and perform encryption encapsulation on a message according to a content of the table entry through an ESP tunnel mode at first, and then send the message to the forwarding device 2.
Step 9: when a data packet to be forwarded reaches the forwarding device2, the forwarding device 2 may search for a corresponding SA table entry and perform decryption processing on a message according to a content of the table entry, and then forward the message.
Step 10: when a life cycle of the SA ends after 2,400 seconds, the central controller may recalculate a key and transmit a new SA to the forwarding device 1 and the forwarding device 2.

To sum up, the forwarding device 1 and the forwarding device 2 create the IPSec SA and manage the IPSec SA through the central controller.

Fig. 4 is a structural block diagram of a system for sending configuration information according to an embodiment of the disclosure. As shown in Fig. 4, the system for sending configuration information may include: a central controller 10, wherein the central controller 10 may include: a configuration component 100, configured to respectively configure a configure parameter set for each of the multiple forwarding devices, wherein the parameter set is used for establishing an SA between each pair of the forwarding devices in the forwarding devices; a creation component 102, configured to negotiate the each of the multiple forwarding devices and create one or more security channels between the central controller and the each of the multiple forwarding devices; and a transmission component 104, configured to send the parameter set to the each of the multiple forwarding devices through the security channels.

By the system shown in Fig. 4, the problem of tediousness, complexity and lower security of a manner of establishing SAs among the multiple forwarding devices in the related art is solved, complexity in the establishment of the SAs among the multiple forwarding devices is further lowered, and data transmission security is further improved.

In an example embodiment, the creation component 102 is configured to respectively negotiate with the each of the multiple forwarding devices and create one or more IPSec security channels between the central controller and the each of the multiple forwarding devices.

In an example embodiment, the creation component 102 may include: a negotiation element (not shown in Fig. 4), configured to perform an IKE negotiation with the each of the multiple forwarding devices through a preset programmable interface; and a creation element (not shown in Fig. 4), configured to, when a output of the negotiation element is YES, create the one or more IPSec security channels between the central controller and the each of the multiple forwarding devices.

In an example embodiment, the sending component 104 may include: a connection element (not shown in Fig. 4), configured to perform secure connection with the each of the multiple forwarding devices through the one or more IPSec security channels; and a sending element (not shown in Fig. 4), configured to send the parameter set to the each of the multiple forwarding devices through a preset network protocol or in a preset management manner.

In an example implementation process, the preset network protocol or the preset management manner may include, but not limited to, one of: a TELNET; an SSH; an SNMP; a NETCONF; a CPE TR069; a WEBGUI-based management manner; an FTP; a TFTP; an SFTP; a system log; a YANG language mode; and a BGP.

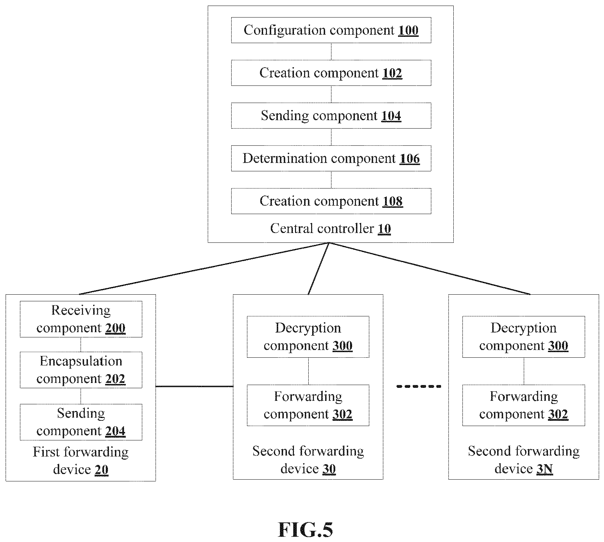

In an example embodiment, as shown in Fig. 5, the system may further include: a first forwarding device 20 of the multiple forwarding devices, wherein the first forwarding device 20 may include: a receiving component 200, configured to receive a data message to be forwarded to one or more second forwarding devices in the multiple forwarding devices; an encapsulation component 202, configured to acquire encapsulation mode information and key information from the parameter set, and perform encryption encapsulation processing on the data message to be forwarded according to the encapsulation mode information and the key information; and a sending component 204, configured to send the encapsulated data message to the one or more second forwarding devices.

In an example embodiment, as shown in Fig. 5, the system may further include: the one or more second forwarding devices 30, wherein each of the one or more second forwarding devices 30 may include: a decryption component 300, configured to acquire decryption information from the parameter set, and decrypt the data message to be forwarded by adopting the decryption information; and a forwarding component 302, configured to forward the decrypted data message.

In an example embodiment, as shown in Fig. 5, the central controller may further include: a determination component 106, configured to determine that a life cycles of the SA ends; and a creation component 108, configured to recalculate key information and recreate a parameter set to re-establish an SA.

In the example implementation process, the parameter set may include, but not limited to, at least one of:
a VPN type between the each pair of the forwarding devices in forwarding devices;
an SPI configured for the each of the multiple forwarding devices by the central controller;
an IPSec tunnel source IP address configured for the each of the multiple forwarding devices by the central controller;
an IPSec tunnel destination IP address configured for the each of the multiple forwarding devices by the central controller;
a security protocol configured for the each of the multiple forwarding devices by the central controller;
an encapsulation mode configured for the each of the multiple forwarding devices by the central controller;
an encryption algorithm configured for the each of the multiple forwarding devices by the central controller;
an encryption key calculated for the each of the multiple forwarding devices by the central controller;
an integrity algorithm configured for the each of the multiple forwarding devices by the central controller;
an integrity key calculated for the each of the multiple forwarding devices by the central controller;
an anti-replay window size configured for the each of the multiple forwarding devices by the central controller;
an SA life cycle type configured for the each of the multiple forwarding devices by the central controller;
an ESP algorithm mode configured for the each of the multiple forwarding devices by the central controller; and
an encryption mode configured for the each of the multiple forwarding devices by the central controller.

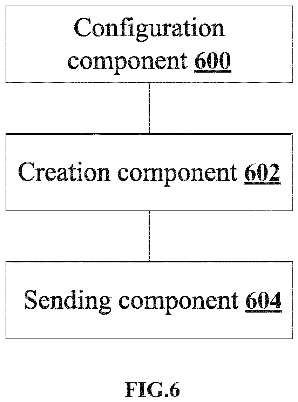

Fig. 6 is a structural block diagram of a device for sending configuration information according to an embodiment of the disclosure. As shown in Fig. 6, the device for sending configuration information may include: a configuration component 600, configured to respectively configure a parameter set for each of multiple forwarding devices, wherein the parameter set is used for establishing an SA between each pair of the forwarding devices in the multiple forwarding devices; a creation component 602, configured to negotiate with the each of the multiple forwarding devices and create one or more security channels between the central controller and the each of the multiple forwarding devices; and a sending component 604, configured to send the parameter set to the each of the multiple forwarding devices through the one or more security channels.

From the above, it can be seen that the embodiment achieves the following technical effects (it is important to be noted that these effects are effects achievable for some example embodiments): the disclosure provides a technical solution for creating IPSec SAs, particularly a technical solution for creating IPSec SAs on the basis of a network virtualization architecture. Therefore, the problem of tediousness and complexity of configuration work under the condition that there are a huge number of routers in the related art is solved, an interaction process of many IKE signalling messages between the multiple forwarding devices is simplified, and an occupied bandwidth is reduced; and in addition, problem about security of high-level parameter transmission between the multiple forwarding devices and the central controller may also be solved, and meanwhile, it is agreed that the central controller performs IPSec parameter configuration of the multiple forwarding devices in a network virtualization framework.

Obviously, those skilled in the art should know that each of the mentioned components or steps of the disclosure may be realized by universal computing devices; the modules or steps may be focused on single computing device, or distributed on the network formed by multiple computing devices; selectively, they may be realized by the program codes which may be executed by the computing device; thereby, the modules or steps may be stored in the storage device and executed by the computing device; and under some circumstances, the shown or described steps may be executed in different orders, or may be independently manufactured as each integrated circuit module, or multiple modules or steps thereof may be manufactured to be single integrated circuit module, thus to be realized. In this way, the disclosure is not restricted to any particular hardware and software combination.

The descriptions above are only the preferable embodiment of the disclosure, which are not used to restrict the disclosure, for those skilled in the art, the disclosure may have various changes and variations. Any amendments, equivalent substitutions, improvements, etc. within the principle of the disclosure are all included in the scope of the protection of the disclosure.

### Industrial Applicability

From the above, the method, system and device for sending configuration information provided by the embodiments of the disclosure have the following beneficial effects: the problem of tediousness and complexity of configuration work under the condition that there are a huge number of routers in the related art is solved, an interaction process of many IKE signalling messages among multiple forwarding devices is simplified, and an occupied bandwidth is reduced; and in addition, problem about security of high-level parameter transmission between each of the multiple forwarding devices and a central controller may also be solved, and meanwhile, it is agreed that the central controller performs IPSec parameter configuration of the multiple forwarding devices in a network virtualization framework.

## Claims

1. A method for sending configuration information, comprising:
configuring, by a central controller (10), a parameter set for each of multiple forwarding devices, wherein the parameter sets are used for establishing a Security Association, SA, between each pair of forwarding devices in the multiple forwarding devices (S202);
negotiating, by the central controller, with each of the multiple forwarding devices and creating, by the central controller, a security channel between the central controller and each of the multiple forwarding devices (S204); and
sending, by the central controller, a parameter set to each of the multiple forwarding devices through the respective security channel (S206).

2. The method as claimed in claim 1, wherein the central controller negotiates with each of the multiple forwarding devices and creates an Internet Protocol Security, IPSec, security channel between the central controller and each of the multiple forwarding devices.

3. The method as claimed in claim 2, wherein negotiating, by the central controller, with each of the multiple forwarding devices and creating, by the central controller, a security channel between the central controller and each of the multiple forwarding devices comprises:
performing, by the central controller, an Internet Key Exchange, IKE, negotiation with each of the multiple forwarding devices through a preset programmable interface; and
when a consistent negotiation result is obtained, creating, by the central controller, the one or more IPSec security channels between the central controller and each of the multiple forwarding devices.

4. The method as claimed in claim 2, wherein sending, by the central controller, the parameter set to each of the multiple forwarding devices through the one or more IPSec security channels comprises:
establishing, by the central controller, secure connection with each of the multiple forwarding devices through the one or more IPSec security channels; and
sending, by the central controller, a parameter set to each of the multiple forwarding devices through a preset network protocol or in a preset management manner.

5. The method as claimed in claim 4, wherein the preset network protocol or the preset management manner comprises one of the followings:
a telecommunication network protocol, TELNET;
a Secure Shell Protocol, SSH;
a Simple Network Management Protocol, SNMP;
a network configuration protocol, NETCONF;
a Customer Premise Equipment, CPE, wireless area network management protocol, TR069;
a web open source system, WEBGUI, -based management manner;
a File Transfer Protocol, FTP;
a Trivial File Transfer Protocol, TFTP;
a Secure File Transfer Protocol, SFTP;
a system log;
a Yet Another Next Generation, YANG, language mode; and
a Border Gateway Protocol, BGP.

6. The method as claimed in claim 1 wherein, after sending, by the central controller, the parameter set to each of the multiple forwarding devices through the one or more security channels, the method further comprises:
receiving, by a first forwarding device in the multiple forwarding devices, a data message to be forwarded to one or more second forwarding devices in the multiple forwarding devices;
acquiring, by the first forwarding device, encapsulation mode information and key information from the parameter set, and performing, by the first forwarding device according to the encapsulation mode information and the key information, encryption and encapsulation processing on the data message to be forwarded; and
sending, by the first forwarding device, the encapsulated data message to the one or more second forwarding devices.

7. The method as claimed in claim 6 wherein, after sending, by the central controller, the parameter set to the each of the multiple forwarding devices through the one or more security channels, the method further comprises:
acquiring, by the one or more second forwarding devices, decryption information from the parameter set, and decrypting, by the one or more second forwarding devices according to the decryption information, the data message to be forwarded; and
forwarding, by the one or more second forwarding devices, the decrypted data message.

8. The method as claimed in claim 1 wherein, after sending, by the central controller, the parameter set to the each of the multiple forwarding devices through the one or more security channels, the method further comprises:
determining, by the central controller, that a life cycle of the SA ends; and
recalculating, by the central controller, key information, and recreating, by the central controller, a parameter set to re-establish an SA.

9. The method as claimed in any one of claims 1 to 8, wherein the parameter set comprises at least one of:
a Virtual Private Network, VPN, type between the each pair of the forwarding devices in the multiple forwarding devices;
a Security Parameter Index, SPI, configured for the each of the multiple forwarding devices by the central controller;
an IPSec tunnel source Internet Protocol, IP, address configured for each of the multiple forwarding devices by the central controller;
an IPSec tunnel destination IP address configured for each of the multiple forwarding devices by the central controller;
a security protocol configured for each of the multiple forwarding devices by the central controller;
an encapsulation mode configured for each of the multiple forwarding devices by the central controller;
an encryption algorithm configured for each of the multiple forwarding devices by the central controller;
an encryption key calculated for each of the multiple forwarding devices by the central controller;
an integrity algorithm configured for each of the multiple forwarding devices by the central controller;
an integrity key calculated for each of the multiple forwarding devices by the central controller;
an anti-replay window size configured for each of the multiple forwarding devices by the central controller;
an SA life cycle type configured for each of the multiple forwarding devices by the central controller;
an Encapsulating Security Payload, ESP, algorithm mode configured for each of the multiple forwarding devices by the central controller; and
an encryption mode configured for each of the multiple forwarding devices by the central controller.

10. A system for sending configuration information, comprising: a central controller (10), wherein
the central controller (10) comprises:
a configuration component (100), configured to respectively configure a parameter set for each of multiple forwarding devices, wherein the parameter set is used for establishing an Security Association, SA, between each pair of forwarding devices in the multiple forwarding devices;
a creation component (102), configured to negotiate with each of the multiple forwarding devices and create one or more security channels between the central controller and each of the multiple forwarding devices; and
a sending component (104), configured to send the parameter set to each of the multiple forwarding devices through the respective security channels.

11. The system as claimed in claim 10, wherein the creation component (102) is configured to respectively negotiate with each of the multiple forwarding devices and create one or more Internet Protocol Security, IPSec, security channels between the central controller and each of the multiple forwarding devices.

12. The system as claimed in claim 11, wherein the creation component (102) comprises:
a negotiation element, configured to perform an Internet Key Exchange, IKE, negotiation with each of the multiple forwarding devices through a preset programmable interface; and
a creation element, configured to, when a output of the negotiation element is YES, create the one or more IPSec security channels between the central controller and each of the multiple forwarding devices.

13. The system as claimed in claim 11, wherein the sending component (104) comprises:
a connection element, configured to establish a secure connection with each of the multiple forwarding devices through the respective IPSec security channels; and
a sending element, configured to send the parameter set to each of the multiple forwarding devices through a preset network protocol or in a preset management manner.

14. The system as claimed in claim 13, wherein the preset network protocol or the preset management manner comprises one of the followings:
a telecommunication network protocol, TELNET;
a Secure Shell Protocol, SSH;
a Simple Network Management Protocol, SNMP;
a network configuration protocol, NETCONF;
a Customer Premise Equipment, CPE, wireless area network management protocol, TR069;
a web open source system, WEBGUI, -based management manner;
a File Transfer Protocol, FTP;
a Trivial File Transfer Protocol, TFTP;
a Secure File Transfer Protocol, SFTP;
a system log;
a Yet Another Next Generation, YANG, language mode; and
a Border Gateway Protocol, BGP.

15. The system as claimed in claim 10, the system further comprises: a first forwarding device (20) in the multiple forwarding devices, wherein
the first forwarding device (20) comprises:
a receiving component (200), configured to receive a data message to be forwarded to one or more second forwarding devices in the multiple forwarding devices;
an encapsulation component (202), configured to acquire encapsulation mode information and key information from the parameter set, and perform, according to the encapsulation mode information and the key information, encryption and encapsulation processing on the data message to be forwarded; and
a sending component (204), configured to send the encapsulated data message to the one or more second forwarding devices.

16. The system as claimed in claim 15, the system further comprises: the one or more second forwarding devices (30), wherein
each of the one or more second forwarding devices (30) comprises:
a decryption component (300), configured to acquire decryption information from the parameter set, and decrypt the data message to be forwarded according to the decryption information; and
a forwarding component (302), configured to forward the decrypted data message.

17. The system as claimed in claim 10, wherein the central controller (10) further comprises:
a determination component (106), configured to determine that a life cycle of the SA ends; and
a creation component (108), configured to recalculate key information and recreate a parameter set to re-establish an SA.

18. The system as claimed in any one of claims 10 to 17, wherein the parameter sets comprise at least one of:
a Virtual Private Network, VPN, type between each pair of the forwarding devices in the multiple forwarding devices;
a Security Parameter Index, SPI, configured for each of the multiple forwarding devices by the central controller;
an IPSec tunnel source Internet Protocol, IP, address configured for each of the multiple forwarding devices by the central controller;
an IPSec tunnel destination IP address configured for each of the multiple forwarding devices by the central controller;
a security protocol configured for each of the multiple forwarding devices by the central controller;
an encapsulation mode configured for each of the multiple forwarding devices by the central controller;
an encryption algorithm configured for each of the multiple forwarding devices by the central controller;
an encryption key calculated for each of the multiple forwarding devices by the central controller;
an integrity algorithm configured for each of the multiple forwarding devices by the central controller;
an integrity key calculated for each of the multiple forwarding devices by the central controller;
an anti-replay window size configured for each of the multiple forwarding devices by the central controller;
an SA life cycle type configured for each of the multiple forwarding devices by the central controller;
an Encapsulating Security Payload, ESP, algorithm mode configured for each of the multiple forwarding devices by the central controller; and
an encryption mode configured for each of the multiple forwarding devices by the central controller.

19. A central controller (10) for sending configuration information, comprising:
a configuration component (600), configured to respectively configure a parameter set for each of multiple forwarding devices, wherein the parameter set is used for establishing a Security Association, SA, between each pair of forwarding devices in the multiple forwarding devices;
a creation component (602), configured to negotiate with each of the multiple forwarding devices and create one or more security channels between the central controller and each of the multiple forwarding devices; and
a sending component (604), configured to send the parameter set to each of the multiple forwarding devices through the one or more security channels.

## Patentansprüche

1. Verfahren zum Senden von Konfigurationsinformationen, umfassend:
Konfigurieren eines Parametersatzes für jede von mehreren Weiterleitungsvorrichtungen durch eine zentrale Steuerung (10), wobei die Parametersätze zum Herstellen einer Sicherheitszuordnung, SA, zwischen jedem Paar von Weiterleitungsvorrichtungen in den mehreren Weiterleitungsvorrichtungen verwendet werden (S202);
Verhandeln mit jeder der mehreren Weiterleitungsvorrichtungen durch die zentrale Steuerung und Erzeugen eines Sicherheitskanals zwischen der zentralen Steuerung und jeder der mehreren Weiterleitungsvorrichtungen durch die zentrale Steuerung (S204); und
Senden eines Parametersatzes an jede der mehreren Weiterleitungsvorrichtungen über den jeweiligen Sicherheitskanal durch die zentrale Steuerung (S206).

2. Verfahren nach Anspruch 1, wobei die zentrale Steuerung mit jeder der mehreren Weiterleitungsvorrichtungen verhandelt und einen Sicherheitskanal für Internetprotokollsicherheit, IPSec, zwischen der zentralen Steuerung und jeder der mehreren Weiterleitungsvorrichtungen erzeugt.

3. Verfahren nach Anspruch 2, wobei das Verhandeln mit jeder der mehreren Weiterleitungsvorrichtungen durch die zentrale Steuerung und das Erzeugen eines Sicherheitskanals zwischen der zentralen Steuerung und jeder der mehreren Weiterleitungsvorrichtungen durch die zentrale Steuerung Folgendes umfasst:
Durchführen einer Verhandlung mittels Internet Key Exchange, IKE (Internetschlüsselaustauschs), mit jeder der mehreren Weiterleitungsvorrichtungen über eine voreingestellte programmierbare Schnittstelle durch die zentrale Steuerung; und,
wenn ein konsistentes Verhandlungsergebnis erhalten wird, Erzeugen des einen oder der mehreren IPSec-Sicherheitskanäle zwischen der zentralen Steuerung und jeder der mehreren Weiterleitungsvorrichtungen durch die zentrale Steuerung.

4. Verfahren nach Anspruch 2, wobei das Senden des Parametersatzes an jede der mehreren Weiterleitungsvorrichtungen über den einen oder die mehreren IPSec-Sicherheitskanäle durch die zentrale Steuerung Folgendes umfasst:
Herstellen einer sicheren Verbindung mit jeder der mehreren Weiterleitungsvorrichtungen über den einen oder die mehreren IPSec-Sicherheitskanäle durch die zentrale Steuerung; und
Senden eines Parametersatzes an jede der mehreren Weiterleitungsvorrichtungen über ein voreingestelltes Netzprotokoll oder mit einer voreingestellten Verwaltungsmethode durch die zentrale Steuerung.

5. Verfahren nach Anspruch 4, wobei das voreingestellte Netzprotokoll oder die voreingestellte Verwaltungsmethode eines der folgenden umfasst:
ein Telekommunikationsnetzprotokoll, TELNET;
ein Secure-Shell-Protokoll, SSH;
ein einfaches Netzverwaltungsprotokoll, SNMP;
ein Netzkonfigurationsprotokoll, NETCONF;
ein Verwaltungsprotokoll für ein drahtloses lokales Netzwerk, TR069, für ein Kundenheimendgerät, CPE);
eine auf einem Web-Open-Source-System, WEBGUI, basierende Verwaltungsmethode;
ein Dateienübertragungsprotokoll, FTP;
ein Trivialdateienübertragungsprotokoll, TFTP;
ein sicheres Dateienübertragungsprotokoll, SFTP;
ein Systemprotokoll;
einen Yet-Another-Next-Generation-Sprachmodus, YANG-Sprachmodus; und
ein Border-Gateway-Protokoll, BGP.

6. Verfahren nach Anspruch 1, wobei nach dem Senden des Parametersatzes an jede der mehreren Weiterleitungsvorrichtungen über den einen oder die mehreren Sicherheitskanäle durch die zentrale Steuerung das Verfahren ferner Folgendes umfasst:
Empfangen einer Datennachricht zur Weiterleitung an eine oder mehrere zweite Weiterleitungsvorrichtungen in den mehreren Weiterleitungsvorrichtungen durch eine erste Weiterleitungsvorrichtung in den mehreren Weiterleitungsvorrichtungen;
Erwerben von Verkapselungsmodusinformationen und Schlüsselinformationen aus dem Parametersatz durch die erste Weiterleitungsvorrichtung und Durchführen von Verschlüsselungs- und Verkapselungsverarbeitung in der weiterzuleitenden Datennachricht gemäß den Verkapselungsmodusinformationen und den Schlüsselinformationen durch die erste Weiterleitungsvorrichtungen; und
Senden der verkapselten Datennachricht an die eine oder die mehreren zweiten Weiterleitungsvorrichtungen durch die erste Weiterleitungsvorrichtung.

7. Verfahren nach Anspruch 6, wobei nach dem Senden des Parametersatzes an jede der mehreren Weiterleitungsvorrichtungen über den einen oder die mehreren Sicherheitskanäle durch die zentrale Steuerung das Verfahren ferner Folgendes umfasst:
Erwerben von Entschlüsselungsinformationen aus dem Parametersatz durch die eine oder die mehreren zweiten Weiterleitungsvorrichtungen und Entschlüsseln der weiterzuleitenden Datennachricht gemäß den Entschlüsselungsinformationen durch die eine oder die mehreren zweiten Weiterleitungsvorrichtungen; und
Weiterleiten der entschlüsselten Datennachricht durch die eine oder die mehreren zweiten Weiterleitungsvorrichtungen.

8. Verfahren nach Anspruch 1, wobei nach dem Senden des Parametersatzes an jede der mehreren Weiterleitungsvorrichtungen über den einen oder die mehreren Sicherheitskanäle durch die zentrale Steuerung das Verfahren ferner Folgendes umfasst:
Bestimmen, dass ein Lebenszyklus der SA endet, durch die zentrale Steuerung; und
Neuberechnen von Schlüsselinformationen durch die zentrale Steuerung und erneutes Erzeugen eines Parametersatzes durch die zentrale Steuerung, um eine SA wiederherzustellen.

9. Verfahren nach einem beliebigen der Ansprüche 1 bis 8, wobei der Parametersatz mindestens eines der folgenden umfasst:
einen Typ virtuelles privates Netz, VPN, zwischen jedem Paar der Weiterleitungsvorrichtungen in den mehreren Weiterleitungsvorrichtungen;
einen Sicherheitsparameterindex, SPI, der durch die zentrale Steuerung für jede der mehreren Weiterleitungsvorrichtungen konfiguriert wird;
eine Internetprotokolladresse, IP-Adresse, einer IPSec-Tunnelquelle, die durch die zentrale Steuerung für jede der mehreren Weiterleitungsvorrichtungen konfiguriert wird;
eine IPSec-Tunnel-Ziel-IP-Adresse, die durch die zentrale Steuerung für jede der mehreren Weiterleitungsvorrichtungen konfiguriert wird;
ein Sicherheitsprotokoll, das durch die zentrale Steuerung für jede der mehreren Weiterleitungsvorrichtungen konfiguriert wird;
einen Verkapselungsmodus, der durch die zentrale Steuerung für jede der mehreren Weiterleitungsvorrichtungen konfiguriert wird;
einen Verschlüsselungsalgorithmus, der durch die zentrale Steuerung für jede der mehreren Weiterleitungsvorrichtungen konfiguriert wird;
einen Verschlüsselungsschlüssel, der durch die zentrale Steuerung für jede der mehreren Weiterleitungsvorrichtungen berechnet wird;
einen Integritätsalgorithmus, der durch die zentrale Steuerung für jede der mehreren Weiterleitungsvorrichtungen konfiguriert wird;
einen Integritätsschlüssel, der durch die zentrale Steuerung für jede der mehreren Weiterleitungsvorrichtungen konfiguriert wird;
eine Anti-Replay-Fenstergröße, die durch die zentrale Steuerung für jede der mehreren Weiterleitungsvorrichtungen konfiguriert wird;
einen Typ SA-Lebenszyklus, der durch die zentrale Steuerung für jede der mehreren Weiterleitungsvorrichtungen konfiguriert wird;
einen Algorithmusmodus für eine Verkapselungssicherheitszahllast, ESP, der durch die zentrale Steuerung für jede der mehreren Weiterleitungsvorrichtungen konfiguriert wird; und
einen Verschlüsselungsmodus, der durch die zentrale Steuerung für jede der mehreren Weiterleitungsvorrichtungen konfiguriert wird.

10. System zum Senden von Konfigurationsinformationen, umfassend: eine zentrale Steuerung (10), wobei
die zentrale Steuerung (10) Folgendes umfasst:
eine Konfigurationskomponente (100), die konfiguriert ist, jeweils einen Parametersatz für jede von mehreren Weiterleitungsvorrichtungen zu konfigurieren, wobei der Parametersatz zum Herstellen einer Sicherheitszuordnung, SA, zwischen jedem Paar von Weiterleitungsvorrichtungen in den mehreren Weiterleitungsvorrichtungen verwendet wird;
eine Erzeugungskomponente (102), die konfiguriert ist, mit jeder der mehreren Weiterleitungsvorrichtungen zu verhandeln und einen oder mehrere Sicherheitskanäle zwischen der zentralen Steuerung und jeder der mehreren Weiterleitungsvorrichtungen zu erzeugen; und
eine Sendekomponente (104), die konfiguriert ist, den Parametersatz über die jeweiligen Sicherheitskanäle an jede der mehreren Weiterleitungsvorrichtungen zu senden.

11. System nach Anspruch 10, wobei die Erzeugungskomponente (102) konfiguriert ist, jeweils mit jeder der mehreren Weiterleitungsvorrichtungen zu verhandeln und einen oder mehrere Sicherheitskanäle für Internetprotokollsicherheit, IPSec, zwischen der zentralen Steuerung und jeder der mehreren Weiterleitungsvorrichtungen zu erzeugen.

12. System nach Anspruch 11, wobei die Erzeugungskomponente (102) Folgendes umfasst:
ein Verhandlungselement, das konfiguriert ist, mit jeder der mehreren Weiterleitungsvorrichtungen über eine voreingestellte programmierbare Schnittstelle eine Verhandlung über einen Internetschlüsselaustausch, IKE, durchzuführen; und
ein Erzeugungselement, das konfiguriert ist, wenn eine Ausgabe des Verhandlungselements JA ist, den einen oder die mehreren IPSec-Sicherheitskanäle zwischen der zentralen Steuerung und jeder der mehreren Weiterleitungsvorrichtungen zu erzeugen.

13. System nach Anspruch 11, wobei die Sendekomponente (104) Folgendes umfasst:
ein Verbindungselement, das konfiguriert ist, eine sichere Verbindung mit jeder der mehreren Weiterleitungsvorrichtungen über die jeweiligen IPSec-Sicherheitskanäle herzustellen; und
ein Sendeelement, das konfiguriert ist, den Parametersatz über ein voreingestelltes Netzprotokoll oder mit einer voreingestellten Verwaltungsmethode an jede der mehreren Weiterleitungsvorrichtungen zu senden.

14. System nach Anspruch 13, wobei das voreingestellte Netzprotokoll oder die voreingestellte Verwaltungsmethode eines der folgenden umfasst:
ein Telekommunikationsnetzprotokoll, TELNET;
ein Secure-Shell-Protokoll, SSH;
ein einfaches Netzverwaltungsprotokoll, SNMP;
ein Netzkonfigurationsprotokoll, NETCONF;
ein Verwaltungsprotokoll für ein drahtloses lokales Netzwerk, TR069, für ein Kundenheimendgerät, CPE;
eine auf einem Web-Open-Source-System, WEBGUI, basierende Verwaltungsmethode;
ein Dateienübertragungsprotokoll, FTP;
ein Trivialdateienübertragungsprotokoll, TFTP;
ein sicheres Dateienübertragungsprotokoll, SFTP;
ein Systemprotokoll;
einen Yet-Another-Next-Generation-Sprachmodus, YANG-Sprachmodus; und
ein Border-Gateway-Protokoll, BGP.

15. System nach Anspruch 10, wobei das System ferner Folgendes umfasst: eine erste Weiterleitungsvorrichtung (20) in den mehreren Weiterleitungsvorrichtungen, wobei
die erste Weiterleitungsvorrichtung (20) Folgendes umfasst:
eine Empfangskomponente (200), die konfiguriert ist, eine Datennachricht zur Weiterleitung an eine oder mehrere zweite Weiterleitungsvorrichtungen in den mehreren Weiterleitungsvorrichtungen zu empfangen;
eine Verkapselungskomponente (202), die konfiguriert ist, Verkapselungsmodusinformationen und Schlüsselinformationen aus dem Parametersatz zu erwerben und gemäß den Verkapselungsmodusinformationen und den Schlüsselinformationen Verschlüsselungs- und Einkapselungsverarbeitung an der weiterzuleitenden Datennachricht durchzuführen; und
eine Sendekomponente (204), die konfiguriert ist, die verkapselte Datennachricht an die eine oder die mehreren zweiten Weiterleitungsvorrichtungen zu senden.

16. System nach Anspruch 15, wobei das System ferner Folgendes umfasst: die eine oder die mehreren zweiten Weiterleitungsvorrichtungen (30), wobei
jede der einen oder der mehreren zweiten Weiterleitungsvorrichtungen (30) Folgendes umfasst:
eine Entschlüsselungskomponente (300), die konfiguriert ist, Entschlüsselungsinformationen aus dem Parametersatz zu erwerben und die weiterzuleitende Datennachricht gemäß den Entschlüsselungsinformationen zu entschlüsseln; und
eine Weiterleitungskomponente (302), die konfiguriert ist, die entschlüsselte Datennachricht weiterzuleiten.

17. System nach Anspruch 10, wobei die zentrale Steuerung (10) ferner Folgendes umfasst:
eine Bestimmungskomponente (106), die konfiguriert ist, zu bestimmen, dass ein Lebenszyklus der SA endet; und
eine Erzeugungskomponente (108), die konfiguriert ist, Schlüsselinformationen neu zu berechnen und einen Parametersatz neu zu erzeugen, um eine SA wiederherzustellen.

18. System nach einem beliebigen der Ansprüche 10 bis 17, wobei die Parametersätze mindestens einen der folgenden umfassen:
einen Typ virtuelles privates Netz, VPN, zwischen jedem Paar der Weiterleitungsvorrichtungen in den mehreren Weiterleitungsvorrichtungen;
einen Sicherheitsparameterindex, SPI, der durch die zentrale Steuerung für jede der mehreren Weiterleitungsvorrichtungen konfiguriert wird;
eine Internetprotokolladresse, IP-Adresse, einer IPSec-Tunnelquelle, die durch die zentrale Steuerung für jede der mehreren Weiterleitungsvorrichtungen konfiguriert wird;
eine IPSec-Tunnel-Ziel-IP-Adresse, die durch die zentrale Steuerung für jede der mehreren Weiterleitungsvorrichtungen konfiguriert wird;
ein Sicherheitsprotokoll, das durch die zentrale Steuerung für jede der mehreren Weiterleitungsvorrichtungen konfiguriert wird;
einen Verkapselungsmodus, der durch die zentrale Steuerung für jede der mehreren Weiterleitungsvorrichtungen konfiguriert wird;
einen Verschlüsselungsalgorithmus, der durch die zentrale Steuerung für jede der mehreren Weiterleitungsvorrichtungen konfiguriert wird;
einen Verschlüsselungsschlüssel, der durch die zentrale Steuerung für jede der mehreren Weiterleitungsvorrichtungen berechnet wird;
einen Integritätsalgorithmus, der durch die zentrale Steuerung für jede der mehreren Weiterleitungsvorrichtungen konfiguriert wird;
einen Integritätsschlüssel, der durch die zentrale Steuerung für jede der mehreren Weiterleitungsvorrichtungen konfiguriert wird;
eine Anti-Replay-Fenstergröße, die durch die zentrale Steuerung für jede der mehreren Weiterleitungsvorrichtungen konfiguriert wird;
einen Typ SA-Lebenszyklus, der durch die zentrale Steuerung für jede der mehreren Weiterleitungsvorrichtungen konfiguriert wird;
einen Algorithmusmodus für eine Verkapselungssicherheitszahllast, ESP, der durch die zentrale Steuerung für jede der mehreren Weiterleitungsvorrichtungen konfiguriert wird; und
einen Verschlüsselungsmodus, der durch die zentrale Steuerung für jede der mehreren Weiterleitungsvorrichtungen konfiguriert wird.

19. Zentrale Steuerung (10) zum Senden von Konfigurationsinformationen, umfassend:
eine Konfigurationskomponente (600), die konfiguriert ist, jeweils einen Parametersatz für jede von mehreren Weiterleitungsvorrichtungen zu konfigurieren, wobei der Parametersatz zum Herstellen einer Sicherheitszuordnung, SA, zwischen jedem Paar von Weiterleitungsvorrichtungen in den mehreren Weiterleitungsvorrichtungen verwendet wird;
eine Erzeugungskomponente (602), die konfiguriert ist, mit jeder der mehreren Weiterleitungsvorrichtungen zu verhandeln und einen oder mehrere Sicherheitskanäle zwischen der zentralen Steuerung und jeder der mehreren Weiterleitungsvorrichtungen zu erzeugen; und
eine Sendekomponente (604), die konfiguriert ist, den Parametersatz über einen oder mehrere Sicherheitskanäle an jede der mehreren Weiterleitungsvorrichtungen zu senden.

## Revendications

1. Procédé d'envoi d'informations de configuration, comprenant les étapes consistant à :
configurer, par un contrôleur central (10), un jeu de paramètres pour chacun des multiples dispositifs de transfert, dans lequel les jeux de paramètres sont utilisés pour établir une association de sécurité, SA, entre chaque paire de dispositifs de transfert parmi les multiples dispositifs de transfert (S202) ;
négocier, par le contrôleur central, avec chacun des multiples dispositifs de transfert et créer, par le contrôleur central, un canal de sécurité entre le contrôleur central et chacun des multiples dispositifs de transfert (S204) ; et
envoyer, par le contrôleur central, un jeu de paramètres à chacun des multiples dispositifs de transfert par l'intermédiaire du canal de sécurité respectif (S206).

2. Procédé selon la revendication 1, dans lequel le contrôleur central négocie avec chacun des multiples dispositifs de transfert et crée un canal de sécurité IPSec (sécurité de protocole Internet), entre le contrôleur central et chacun des multiples dispositifs de transfert.

3. Procédé selon la revendication 2, dans lequel la négociation, par le contrôleur central, avec chacun des multiples dispositifs de transfert et la création, par le contrôleur central, d'un canal de sécurité entre le contrôleur central et chacun des multiples dispositifs de transfert comprend les étapes consistant à :
effectuer, par le contrôleur central, une négociation d'échange de clé Internet, IKE, avec chacun des multiples dispositifs de transfert par l'intermédiaire d'une interface programmable prédéfinie; et
lorsqu'un résultat de négociation cohérent est obtenu, créer, par le contrôleur central, le ou les canaux de sécurité IPSec entre le contrôleur central et chacun des multiples dispositifs de transfert.

4. Procédé selon la revendication 2, dans lequel l'envoi, par le contrôleur central, du jeu de paramètres à chacun des multiples dispositifs de transfert par l'intermédiaire du ou des canaux de sécurité IPSec comprend les étapes consistant à :
établir, par le contrôleur central, une connexion sécurisée avec chacun des multiples dispositifs de transfert par l'intermédiaire du ou des canaux de sécurité IPSec ; et
envoyer, par le contrôleur central, un jeu de paramètres à chacun des multiples dispositifs de transfert par le biais d'un protocole réseau prédéfini ou selon un mode de gestion prédéfini.

5. Procédé selon la revendication 4, dans lequel le protocole réseau prédéfini ou le mode de gestion prédéfini comprend l'un des éléments suivants :
un protocole de réseau de télécommunication, TELNET ;
un protocole Secure Shell, SSH ;
un protocole de gestion de réseau simple, SNMP ;
un protocole de configuration de réseau, NETCONF ;
un protocole de gestion de réseau sans fil, TR069, d'équipement de site client, CPE;
un mode de gestion basé sur un système Web open-source, WEBGUI ;
un protocole de transfert de fichiers, FTP;
un protocole de transfert de fichiers trivial, TFTP;
un protocole de transfert de fichiers sécurisé, SFTP;
un journal système ;
un mode de langage d'une nouvelle génération encore, YANG ; et
un protocole de passerelle frontière, BGP.

6. Procédé selon la revendication 1, dans lequel, après l'envoi, par le contrôleur central, du jeu de paramètres à chacun des multiples dispositifs de transfert par l'intermédiaire du ou des canaux de sécurité, le procédé comprend en outre les étapes consistant à :
recevoir, par un premier dispositif de transfert parmi les multiples dispositifs de transfert, un message de données à transférer à un ou plusieurs deuxièmes dispositifs de transfert parmi les multiples dispositifs de transfert ;
acquérir, par le premier dispositif de transfert, des informations de mode d'encapsulation et des informations de clé à partir du jeu de paramètres et exécuter, par le premier dispositif de transfert, en fonction des informations de mode d'encapsulation et des informations de clé, le traitement de cryptage et d'encapsulation sur le message de données à transférer ; et
envoyer, par le premier dispositif de transfert, le message de données encapsulé vers le ou les deuxièmes dispositifs de transfert.

7. Procédé selon la revendication 6, dans lequel, après l'envoi, par le contrôleur central, du jeu de paramètres à chacun des multiples dispositifs de transfert par l'intermédiaire du ou des canaux de sécurité, le procédé comprend en outre les étapes consistant à :
acquérir, par le ou les deuxièmes dispositifs de transfert, des informations de décryptage à partir du jeu de paramètres et déchiffrer, par le ou les deuxièmes dispositifs de transfert conformément aux informations de décryptage, le message de données à transférer ; et
transférer, par le ou les deuxièmes dispositifs de transfert, le message de données décrypté.

8. Procédé selon la revendication 1, dans lequel, après l'envoi, par le contrôleur central, du jeu de paramètres à chacun des multiples dispositifs de transfert par l'intermédiaire du ou des canaux de sécurité, le procédé comprend en outre les étapes consistant à :
déterminer, par le contrôleur central, qu'un cycle de vie de la SA se termine ; et
recalculer, par le contrôleur central, les informations de clé et recréer, par le contrôleur central, un jeu de paramètres pour rétablir une SA.

9. Procédé selon l'une quelconque des revendications 1 à 8, dans lequel le jeu de paramètres comprend au moins l'un des éléments suivants :
un type de réseau privé virtuel, VPN, entre chaque paire de dispositifs de transfert dans les multiples dispositifs de transfert ;
un index de paramètre de sécurité, SPI, configuré pour chacun des multiples dispositifs de transfert par le contrôleur central ;
une adresse de protocole Internet, IP de source de tunnel IPSec configurée pour chacun des multiples dispositifs de transfert par le contrôleur central ;
une adresse IP de destination de tunnel IPSec configurée pour chacun des multiples dispositifs de transfert par le contrôleur central ;
un protocole de sécurité configuré pour chacun des multiples dispositifs de transfert par le contrôleur central ;
un mode d'encapsulation configuré pour chacun des multiples dispositifs de transfert par le contrôleur central ;
un algorithme de cryptage configuré pour chacun des multiples dispositifs de transfert par le contrôleur central ;
une clé de cryptage calculée pour chacun des multiples dispositifs de transfert par le contrôleur central ;
un algorithme d'intégrité configuré pour chacun des multiples dispositifs de transfert par le contrôleur central ;
une clé d'intégrité calculée pour chacun des multiples dispositifs de transfert par le contrôleur central ;
une taille de fenêtre anti-relecture configurée pour chacun des multiples dispositifs de transfert par le contrôleur central ;
un type de cycle de vie de SA configuré pour chacun des multiples dispositifs de transfert par le contrôleur central ;
un mode d'algorithme de charge utile de sécurité d'encapsulation, ESP, configuré pour chacun des multiples dispositifs de transfert par le contrôleur central ; et
un mode de cryptage configuré pour chacun des multiples dispositifs de transfert par le contrôleur central.

10. Système d'envoi d'informations de configuration, comprenant: un contrôleur central (10), dans lequel
le contrôleur central (10) comprend :
un composant de configuration (100), configuré pour configurer respectivement un jeu de paramètres pour chacun des multiples dispositifs de transfert, dans lequel ledit jeu de paramètres est utilisé pour établir une association de sécurité, SA, entre chaque paire de dispositifs de transfert dans les multiples dispositifs de transfert ;
un composant de création (102), configuré pour négocier avec chacun des multiples dispositifs de transfert et créer un ou plusieurs canaux de sécurité entre le contrôleur central et chacun des multiples dispositifs de transfert; et
un composant d'envoi (104), configuré pour envoyer le jeu de paramètres à chacun des multiples dispositifs de transfert par l'intermédiaire des canaux de sécurité respectifs.

11. Système selon la revendication 10, dans lequel le composant de création (102) est configuré pour négocier respectivement avec chacun des multiples dispositifs de transfert et créer un ou plusieurs canaux de sécurité IPSec (sécurité de protocole Internet) entre le contrôleur central et chacun des multiples dispositifs de transfert.

12. Système selon la revendication 11, dans lequel le composant de création (102) comprend :
un élément de négociation, configuré pour effectuer une négociation d'échange de clé Internet, IKE, avec chacun des multiples dispositifs de transfert par l'intermédiaire d'une interface programmable prédéfinie; et
un élément de création, configuré pour, lorsqu'une sortie de l'élément de négociation est OUI, créer le ou les canaux de sécurité IPSec entre le contrôleur central et chacun des multiples dispositifs de transfert.

13. Système selon la revendication 11, dans lequel le composant d'envoi (104) comprend :
un élément de connexion, configuré pour établir une connexion sécurisée avec chacun des multiples dispositifs de transfert par l'intermédiaire des canaux de sécurité IPSec respectifs; et
un élément d'envoi, configuré pour envoyer le jeu de paramètres à chacun des multiples dispositifs de transfert par le biais d'un protocole réseau prédéfini ou selon un mode de gestion prédéfini.

14. Système selon la revendication 13, dans lequel le protocole réseau prédéfini ou le mode de gestion prédéfini comprend l'un des éléments suivants :
un protocole de réseau de télécommunication, TELNET;
un protocole Secure Shell, SSH;
un protocole de gestion de réseau simple, SNMP;
un protocole de configuration de réseau, NETCONF;
un protocole de gestion de réseau sans fil, TR069, d'équipement de site client, CPE;
un mode de gestion basé sur un système Web open-source, WEBGUI;
un protocole de transfert de fichiers, FTP;
un protocole de transfert de fichiers trivial, TFTP;
un protocole de transfert de fichiers sécurisé, SFTP;
un journal système;
un mode de langage d'une nouvelle génération encore, YANG; et
un protocole de passerelle frontière, BGP.

15. Système selon la revendication 10, le système comprenant en outre: un premier dispositif de transfert (20) parmi les multiples dispositifs de transfert, dans lequel
le premier dispositif de transfert (20) comprend :
un composant de réception (200), configuré pour recevoir un message de données à transférer à un ou plusieurs deuxièmes dispositifs de transfert parmi les multiples dispositifs de transfert ;
un composant d'encapsulation (202), configuré pour acquérir des informations de mode d'encapsulation et des informations de clé à partir du jeu de paramètres et effectuer, en fonction des informations de mode d'encapsulation et des informations de clé, le traitement de cryptage et d'encapsulation sur le message de données à transférer; et
un composant d'envoi (204), configuré pour envoyer le message de données encapsulé auxdits un ou plusieurs deuxièmes dispositifs de transfert.

16. Système selon la revendication 15, le système comprenant en outre: le ou les deuxièmes dispositifs de transfert (30), dans lequel
chacun des un ou plusieurs deuxièmes dispositifs de transfert (30) comprend:
un composant de décryptage (300), configuré pour acquérir des informations de décryptage à partir du jeu de paramètres et décrypter le message de données à transférer en fonction des informations de décryptage; et
un composant de transfert (302), configuré pour transférer le message de données décrypté.

17. Système selon la revendication 10, dans lequel le contrôleur central (10) comprend en outre:
un composant de détermination (106), configuré pour déterminer qu'un cycle de vie de la SA se termine; et
un composant de création (108), configuré pour recalculer les informations de clé et recréer un jeu de paramètres afin de rétablir une SA.

18. Système selon l'une quelconque des revendications 10 à 17, dans lequel les jeux de paramètres comprennent au moins un élément parmi:
un type de réseau privé virtuel, VPN, entre chaque paire de dispositifs de transfert parmi les multiples dispositifs de transfert;
un index de paramètre de sécurité, SPI, configuré pour chacun des multiples dispositifs de transfert par le contrôleur central;
une adresse de protocole Internet, IP, de source de tunnel IPSec configurée pour chacun des multiples dispositifs de transfert par le contrôleur central ;
une adresse IP de destination de tunnel IPSec configurée pour chacun des multiples dispositifs de transfert par le contrôleur central ;
un protocole de sécurité configuré pour chacun des multiples dispositifs de transfert par le contrôleur central;
un mode d'encapsulation configuré pour chacun des multiples dispositifs de transfert par le contrôleur central;
un algorithme de cryptage configuré pour chacun des multiples dispositifs de transfert par le contrôleur central;
une clé de cryptage calculée pour chacun des multiples dispositifs de transfert par le contrôleur central;
un algorithme d'intégrité configuré pour chacun des multiples dispositifs de transfert par le contrôleur central;
une clé d'intégrité calculée pour chacun des multiples dispositifs de transfert par le contrôleur central;
une taille de fenêtre anti-relecture configurée pour chacun des multiples dispositifs de transfert par le contrôleur central;
un type de cycle de vie de SA configuré pour chacun des multiples dispositifs de transfert par le contrôleur central ;
un mode d'algorithme de charge utile de sécurité d'encapsulation, ESP, configuré pour chacun des multiples dispositifs de transfert par le contrôleur central; et
un mode de cryptage configuré pour chacun des multiples dispositifs de transfert par le contrôleur central.

19. Contrôleur central (10) pour envoyer des informations de configuration, comprenant :
un composant de configuration (600), configuré pour configurer respectivement un jeu de paramètres pour chacun des multiples dispositifs de transfert, dans lequel ledit jeu de paramètres est utilisé pour établir une association de sécurité, SA, entre chaque paire de dispositifs de transfert dans les multiples dispositifs de transfert;
un composant de création (602), configuré pour négocier avec chacun des multiples dispositifs de transfert et créer un ou plusieurs canaux de sécurité entre le contrôleur central et chacun des multiples dispositifs de transfert; et
un composant d'envoi (604), configuré pour envoyer le jeu de paramètres à chacun des multiples dispositifs de transfert par l'intermédiaire du ou des canaux de sécurité.
